# EUROPÄISCHE PATENTSCHRIFT

(11) **EP 3 608 193 B1**
(45) Veröffentlichungstag und Bekanntmachung des Hinweises auf die Patenterteilung: **09.08.2023**
(21) Anmeldenummer: 19180236.2
(22) Anmeldetag: 14.06.2019
(51) Int. Cl.: B60W 50/023, F16H 61/12, B60L 1/00, F16H 61/00

(54) **ELEKTRISCHES STEUERGERÄT FÜR EIN FAHRZEUG SOWIE SYSTEM DAMIT UND VERFAHREN ZUM BETREIBEN EINES FAHRZEUGS**
ELECTRIC CONTROL DEVICE FOR A VEHICLE, AS WELL AS SYSTEM WITH SAME AND METHOD FOR OPERATING A VEHICLE
APPAREIL DE COMMANDE ÉLECTRIQUE POUR UN VÉHICULE AINSI QUE SYSTÈME CORRESPONDANT ET PROCÉDÉ DE FONCTIONNEMENT D'UN VÉHICULE

(30) Priorität: 19.07.2018 DE 102018117447
(43) Veröffentlichungstag der Anmeldung: 12.02.2020
(73) Patentinhaber: ZF CV Systems Europe BV, 1170 Brussels (BE)
(72) Erfinder: DETTMER, Stefan, 30916 Isernhagen (DE); FÜSSEL, Hendrik, 30165 Hannover (DE); LÖLL, Jann, 26441 Jever (DE); WUSTRACK, Tobias, 30890 Barsinghausen (DE)
(74) Vertreter: Rabe, Dirk-Heinrich

(56) Entgegenhaltungen:
- EP-A1- 2 439 098
- EP-A2- 2 587 618
- EP-A2- 2 783 904
- DE-A1-102012 221 570
- DE-T5-112006 001 741
- US-A- 4 379 332
- US-A1- 2006 222 910
- US-B1- 6 390 215

## Beschreibung

Die Erfindung betrifft den Bereich der Steuergeräte für Fahrzeuge, insbesondere für Nutzfahrzeuge, wie Lastkraftwagen oder dergleichen, oder für einen Personenkraftwagen. Steuergeräte sind bekannt und werden im Bereich von Fahrzeugen überwiegend zur Versorgung und/oder Ansteuerung von Komponenten des Fahrzeugs eingesetzt. Komponenten bezeichnen hier insbesondere elektrische oder elektro-mechanische Komponenten.

Üblicherweise umfasst das Steuergerät einen Energieversorgungsanschluss und Ausgänge zur Versorgung und/oder zur Ansteuerung der Komponenten. Außerdem ist eine Steuerschaltung vorgesehen. Somit wird einem Steuergerät über den Energieversorgungsanschluss Energie zugeführt, mit der dann an Ausgängen des Steuergeräts angeschlossene Komponenten in Abhängigkeit der Steuereinheit angesteuert werden. Hierbei stehen der Steuereinheit des Steuergeräts üblicherweise Daten- oder Schaltsignale, beispielsweise von Sensoren oder Schaltern, zur Verfügung, um die angesteuerten Komponenten auch in Abhängigkeit dieser Signale zu versorgen.

Im Dokument EP 0 692 396 B1 wird beispielsweise ein Steuergerät offenbart, das in einem Anhänger eines Zugfahrzeugs einbaubar ist. Das Steuergerät dient, um im Anhänger die Beleuchtungs- und Signalanlage des Anhängerfahrzeugs anzusteuern. Hierfür erhält das Steuergerät lediglich ein Steuersignal über einen oder zwei Datennetzanschlüsse sowie eine Spannungsversorgung vom Zugfahrzeug.

Der Ausfall eines derartigen Steuergeräts oder ein Defekt bereits einer einzigen der Anschlussleitungen würde demnach zu einem kompletten Ausfall der Beleuchtungs- und Signalanlage des Anhängerfahrzeugs führen.

DE112006001741 T5, US2006/222910A1, DE102012221570A1 offenbaren Steuergeräte für Fahrzeuge gemäss dem Stand der Technik.

Demnach werden Steuergeräte im Betrieb des Fahrzeugs neben Komfortfunktionen also insbesondere auch für sicherheitsrelevante Anwendungen eingesetzt. Der Ausfall eines Steuergeräts für eine sicherheitsrelevante Anwendung kann somit eine vom Fahrzeug ausgehende Gefahr darstellen und einen sicheren Fahrzustand gefährden.

Beispielsweise werden Steuergeräte zum Ansteuern von Bremsaktuatoren oder im Bereich des Schaltgetriebes verwendet. Unmittelbar ersichtlich ist die Gefahr durch ein ausfallendes Steuergerät für die Bremsansteuerung. Ein Ausfall eines Bremssteuergeräts kann demnach dazu führen, dass eine Bremsung im Notfall, aber auch bereits im normalen Betrieb, nicht wie gewünscht oder gar nicht ausgeführt werden kann.

Es sind daher unterschiedliche Mechanismen oder Maßnahmen bekannt, um eine Ausfallwahrscheinlichkeit von Steuergeräten insbesondere im Bereich sicherheitsrelevanter Anwendungen zu minimieren. Hierbei ist bekannt, dass eine der häufigsten Ursache für einen Ausfall eines Steuergeräts ist, dass dessen Energieversorgung zum Beispiel durch einen Leitungsbruch oder ein Durchbrennen einer Sicherung versagt. Um dem zu begegnen, ist beispielsweise in dem Dokument DE 10 2014 215 263 A1 offenbart, ein Steuergerät mit einer redundanten Energieversorgung auszustatten, um im Falle des Ausfalls der Primärenergie auf die Hilfs- oder Sekundärenergie umzuschalten.

Allen derartigen Mechanismen oder Maßnahmen zur Verbesserung der Betriebssicherheit von Steuergeräten ist gemeinsam, dass diese verhältnismäßig kostenaufwendig sind und im Verhältnis nur sehr selten zum Einsatz kommen. Ein Kosten-Nutzen-Verhältnis für diese Mechanismen oder Maßnahmen zur Verbesserung der Betriebssicherheit ist demnach im Vergleich zu den Funktionen eines Steuergeräts, die für den normalen Betrieb vorgesehen sind, sehr schlecht.

Es ist daher die Aufgabe der vorliegenden Erfindung, eine Sicherheitsmaßnahme zur Beibehaltung eines sicheren Zustands eines Fahrzeugs bereitzustellen, wobei die für die Maßnahme aufgewendeten Kosten möglichst gering sein sollen. Jedenfalls soll zumindest eine vorteilhafte Alternative zum Stand der Technik gefunden werden.

Hierzu betrifft die Erfindung ein elektrisches Steuergerät für ein Fahrzeug oder einen Fahrzeuganhänger. Die Erfindung ist in den anhängenden Ansprüchen definiert. Das Fahrzeug ist beispielsweise ein Nutzfahrzeug, wie ein Lastkraftwagen oder dergleichen. Gemäß einer Alternative ist das Fahrzeug ein Personenkraftwagen.

Das Steuergerät umfasst eine Steuereinheit zum Betreiben des Steuergeräts. Die Steuereinheit ist beispielsweise eine elektronische oder mikroelektronische Steuereinheit. Eine elektronische oder mikroelektronische Steuereinheit weist vorzugsweise mehrere Eingänge und Ausgänge auf, wobei an den Ausgängen Ausgangssignale in Abhängigkeit von Eingangssignalen an den Eingängen erzeugbar sind. Die Steuereinheit weist insbesondere eine logische Schaltung und/oder einen Prozessor und einen Speicher mit einem Programmcode auf. Der Programmcode wird vom Speicher in den Prozessor geladen und dort ausgeführt, um die Ausgangssignale in Abhängigkeit der Eingangssignale und auch in Abhängigkeit des Programmcodes zu erzeugen.

Außerdem umfasst das erfindungsgemäße Steuergerät einen ersten Energieversorgungsanschluss und einen zweiten Energieversorgungsanschluss. Neben den Energieversorgungsanschlüssen weist das Steuergerät auch Ausgänge auf. Die Ausgänge dienen zum elektrisch ansteuerbaren Verbinden von Komponenten. Die Komponenten sind vorzugsweise elektrische oder elektro-mechanische Komponenten. Ein Ansteuern umfasst insbesondere auch ein elektrisches Versorgen steuerbar an das Steuergerät anschließbarer Komponenten.

Die Steuereinheit ist betreibbar, um das Steuergerät in einem ersten Modus und in einem zweiten Modus zu betreiben. In einem ersten Modus ist eine erste Anzahl der Ausgänge mit Energie vom ersten Energieversorgungsanschluss ansteuerbar. Im zweiten Modus ist eine zweite Anzahl der Ausgänge mit Energie vom zweiten Energieversorgungsanschluss ansteuerbar.

Hierbei ist die zweite Anzahl der Ausgänge, die im zweiten Modus vom zweiten Energieversorgungsanschluss ansteuerbar sind, geringer als die erste Anzahl der Ausgänge, die im ersten Modus vom ersten Energieversorgungsanschluss ansteuerbar sind.

Es wird also zwischen einer ersten Anzahl und einer zweiten Anzahl der Ausgänge unterschieden. Ausgänge sind demnach jeweils der ersten Anzahl und der zweiten Anzahl oder nur der ersten Anzahl zugeordnet. Es gibt demnach Ausgänge, die nur der ersten Anzahl zugeordnet sind und demnach nur im ersten Modus mit Energie vom ersten Energieversorgungsanschluss ansteuerbar sind. Außerdem gibt es Ausgänge, die der ersten Anzahl und der zweiten Anzahl zugeordnet sind und demnach im ersten Modus mit Energie vom ersten Energieversorgungsanschluss und im zweiten Modus mit Energie vom zweiten Energieversorgungsanschluss ansteuerbar sind.

Vorzugsweise sind alle Ausgänge der ersten Anzahl zugeordnet und nur ein Teil der Ausgänge ist auch der zweiten Anzahl zugeordnet.

Das Steuergerät ist somit derart ausgebildet, um im Fall einer gestörten Energieversorgung über den ersten Energieversorgungsanschluss von einem ersten in einen zweiten Modus zu schalten. Folglich wird dann das Steuergerät mit Energie vom zweiten Energieversorgungsanschluss versorgt, um damit einen Teil der mit den Ausgängen verbindbaren Komponenten anzusteuern.

Im zweiten Modus kann somit die Funktion besonders sicherheitsrelevanter Komponenten weiter aufrechterhalten werden, während weniger relevante oder für die Sicherheit sogar nicht relevante Funktionen unterdrückt werden.

Insgesamt wird also die Energieaufnahme im zweiten Modus gegenüber dem ersten Modus dadurch begrenzt, dass nicht mehr alle Ausgänge ansteuerbar sind. Hierdurch ergibt sich die weitere Möglichkeit, den zweiten Energieanschluss durch Kontakte zu realisieren, die gegenüber den Kontakten für den ersten Energieversorgungsanschluss für geringere Stromstärken bei gleicher Spannung ausgelegt sind. Derartige Kontakte für den zweiten Energieversorgungsanschluss sind günstiger als Kontakte für den ersten Energieversorgungsanschluss.

Gemäß einer ersten Ausführungsform weist zumindest ein erster Kontaktpartner des ersten Energieversorgungsanschlusses einen geringeren Leitungswiderstand auf als zumindest ein weiterer erster Kontaktpartner des zweiten Energieversorgungsanschlusses. Ein Kontaktpartner bezeichnet hier beispielsweise einen Kontaktstift oder eine Kontakthülse. Der Leitungswiderstand eines Kontaktpartners ist hier insbesondere als der Widerstand eines Kontaktpartners anzusehen, der zwischen zwei Bereichen des Kontaktpartners liegt, nämlich zwischen einem Bereich, in dem ein Kontaktpartner mit einem anderen Kontaktpartner elektrisch leitend verbindbar ist, und einem Bereich, mit dem der Kontaktpartner mit einer Leitung oder Weiterleitung in dem Steuergerät verbunden ist.

Der Leitungswiderstand ist neben einem spezifischen Widerstand und der Länge einer Leitung auch vom Querschnitt abhängig. Sind die Kontaktpartner gemäß einer Ausführungsform als Stifte ausgebildet, so kann grundsätzlich bei gleichem Material und gleicher Länge der Stifte ein großer Leitungswiderstand auch als kleiner Querschnitt oder ein kleiner Leitungswiderstand auch als großer Querschnitt des Kontaktpartners bezeichnet werden.

Somit ist es möglich, dass bei gleicher Spannung über den ersten Energieversorgungsanschluss im Verhältnis mehr Strom fließen kann als über den zweiten Energieversorgungsanschluss, um im ersten Modus mehr Ausgänge des Steuergeräts ansteuern zu können, als im zweiten Modus. Hierdurch kann der oder die Kontaktpartner des zweiten Energieversorgungsanschlusses im Verhältnis kleiner gewählt werden als der oder die Kontaktpartner des ersten Energieversorgungsanschlusses. Eine günstige Auslegung des zweiten Energieversorgungsanschlusses ist somit möglich.

Gemäß einer weiteren Ausführungsform weist das Steuergerät mindestens einen Signalanschluss auf. Der Signalanschluss dient zum Zuführen von Steuersignalen zum Steuergerät und insbesondere zur Steuereinheit. Der Signalanschluss weist mehrere Kontaktpartner auf. Die Kontaktpartner des Signalanschlusses weisen einen im Wesentlichen gleichen Leitungswiderstand auf. Hierbei sind der Leitungswiderstand eines Kontaktpartners des Signalanschlusses und der Leitungswiderstand zumindest des Weiteren ersten Kontaktpartners des zweiten Energieversorgungsanschlusses im Wesentlichen gleich. Vorzugsweise sind die Kontaktpartner des Signalanschlusses und zumindest der weitere erste Kontaktpartner des zweiten Energieversorgungsanschlusses im Wesentlichen sogar identisch ausgebildet.

Dank diesem Ausführungsbeispiel kann ein einzelner standardisierter Steuergerätestecker verwendet werden, um einerseits Signale für den Signalanschluss und andererseits die Energieversorgung des Steuergeräts bereitzustellen.

Standardisierte Steuergerätestecker oder Steuergerätesteckverbinder weisen üblicherweise mehrere Kontaktpartner auf, die geeignet sind, um mit komplementären Kontaktpartnern eines Steuergeräts elektrisch verbunden zu werden. Hierbei sind in standardisierten Steuergerätesteckern lediglich zwei der Kontaktpartner ausgestaltet, um eine Spannungs- oder Stromversorgung für einen Energieversorgungsanschluss bereitzustellen. Die übrigen Kontaktpartner weisen in der Regel einen höheren Leitungswiderstand auf.

Wird demnach der zweite Energieversorgungsanschluss durch einen oder mehrere Kontaktpartner bereitgestellt, die den gleichen Leitungswiderstand aufweisen, wie der oder die Kontaktpartner des Signalanschlusses, so kann der zweite Energieversorgungsanschluss mit Kontaktpartnern im Steuergerätestecker oder Steuergerätesteckverbinder verbunden werden, die üblicherweise für eine Signalübertragung verwendet werden. Dies ist wiederrum möglich, da dem Steuergerät eine vergleichsweise geringere Energie über den zweiten Energieversorgungsanschluss als über den ersten Energieversorgungsanschluss im Betrieb zugeführt werden muss.

Durch Verwenden eines Standardsteckers ist der Einsatz des elektrischen Steuergeräts günstiger und beispielsweise auch in eine bereits vorhandene Struktur integrierbar.

Gemäß einer weiteren Ausführungsform umfasst der erste Energieversorgungsanschluss zumindest einen ersten Kontaktpartner zum Zuführen eines Spannungspotentials, das vorzugsweise positiv ist. Der zweite Energieversorgungsanschluss umfasst zumindest einen weiteren ersten Kontaktpartner, der ebenfalls zum Zuführen eines Spannungspotentials dient, das vorzugsweise ebenfalls positiv ist.

Es kann demnach vorgesehen sein, dass beide Energieversorgungsanschlüsse ein gemeinsames negatives Spannungspotential haben, wobei jedenfalls sichergestellt ist, dass die positiven Spannungspotentiale für jeden der Energieversorgungsanschlüsse separat bereitgestellt werden.

Gemäß der Erfindung ist das Steuergerät ein Schaltsteuergerät einer Getriebesteuerung, vorzugsweise ein elektrisches Steuergerät einer automatischen oder halbautomatischen Getriebesteuerung. Derartige Schaltsteuergeräte werden auch Transmission Control Unit (TCU) genannt. Ein Beispiel für eine Getriebesteuerung ist eine sogenannte Automatic Manual Transmission (AMT).

Ein als Schaltsteuergerät ausgebildetes Steuergerät gemäß der Erfindung ist vorteilhaft, um einen sicheren Fahrzustand eines Fahrzeugs zu gewährleisten, auch wenn eine Versorgungsleitung des Schaltsteuergeräts, die mit dem ersten Energieversorgungsanschluss verbunden ist, unterbrochen wird. Hierbei kann durch die Steuereinheit festgelegt werden, dass im zweiten Modus jedenfalls die Ausgänge mit Energie versorgt werden, die es ermöglichen, das Getriebe eines Fahrzeugs in eine derartige Übersetzung zu schalten, bei der eine Motorbremse wirksam wird. Hierdurch kann beispielsweise sichergestellt werden, dass bei Bergabfahrt eines Fahrzeugs und Ausfall einer Energieversorgung über den ersten Energieversorgungsanschluss im zweiten Modus des Steuergeräts Komponenten der Bremsanlage weniger belastet werden.

Gemäß der Erfindung ist das Steuergerät eingerichtet, mit mindestens einem der Ausgänge mindestens eine Komponente anzusteuern, die ein Ventil ist. Das Ventil umfasst insbesondere eine elektrische Magnet-Ventilkomponente und/oder eine pneumatische oder hydraulische Ventilkomponente. Besonders bevorzugt ist das Ventil ein Solenoidventil.

Das heißt, dass das Steuergerät vorteilhafterweise derart ausgebildet ist, um die benötigte Energie zum Schalten eines Ventils an mindestens einem Ausgang bereitzustellen.

Gemäß einer weiteren Ausführungsform ist der erste Energieversorgungsanschluss eingerichtet, mit einer Primärenergiequelle verbunden zu werden. Alternativ oder zusätzlich ist der zweite Energieversorgungsanschluss eingerichtet, mit einer Hilfsenergiequelle verbunden zu werden.

Durch eine derartige Ausbildung des Steuergeräts wird es ermöglicht, den ersten Energieversorgungsanschluss beispielsweise mit dem Hauptstromkreis eines Fahrzeugs, der beispielsweise die Fahrzeugbatterie sowie die Lichtmaschine umfasst, verbunden zu werden. Der zweite Energieversorgungsanschluss ist demgegenüber so ausgestaltet, dass dieser mit einer Energiequelle verbindbar ist, die beispielsweise bei Ausfall der Primärenergiequelle immer noch genügend Energie zur Versorgung des Steuergeräts im zweiten Modus liefert. Somit ist auch bei Ausfall der Primärenergiequelle ein Betreiben des Steuergeräts in eingeschränktem Umfang möglich.

Außerdem umfasst die Erfindung ein System mit einer Steuerung nach einer der vorgenannten Ausführungsformen. Das System umfasst zudem wenigstens eine Komponente, die eine elektrische oder elektro-mechanische Komponente ist. Weiter ist die wenigstens eine Komponente mit wenigstens einem der Ausgänge elektrisch verbindbar oder im Betrieb verbunden.

Gemäß einer Ausführungsform weist das System eine Primärenergiequelle und einer Hilfsenergiequelle auf. Die Primärenergiequelle ist mit dem ersten Energieversorgungsanschluss und die Hilfsenergiequelle ist mit dem zweiten Energieversorgungsanschluss elektrisch verbindbar oder im Betrieb verbunden.

Gemäß einer weiteren Ausführungsform umfasst die wenigstens eine Komponente zumindest eine erste und eine zweite Komponente. Zumindest im Betrieb ist die erste Komponente an einem ersten Ausgang der Ausgänge und die zweite Komponente an einem zweiten Ausgang der Ausgänge angeschlossen. Gemäß der Ausführungsform sind der erste und der zweite Ausgang der ersten Anzahl von Ausgängen zugeordnet. Außerdem ist nur der zweite Ausgang des ersten und zweiten Ausgangs auch der zweiten Anzahl von Ausgängen zugeordnet. Demnach ist der erste Ausgang nicht der zweiten Anzahl von Ausgängen zugeordnet.

Demnach sind im ersten Modus die erste und zweite Komponente und im zweiten Modus nur die zweite Komponente ansteuerbar. Hierdurch ist die Energie, die vom zweiten Energieversorgungsanschluss zur Ansteuerung maximal bereitgestellt werden muss, geringer als die Energie, die vom ersten Energieversorgungsanschluss maximal bereitgestellt werden muss. Eine entsprechend günstigere Auslegung der Kontaktpartner des zweiten Energieversorgungsanschlusses ist somit möglich.

Außerdem umfasst die Erfindung ein Verfahren zum Betrieb eines Fahrzeugs unter Ansteuern von Komponenten mit einem Steuergerät nach einem der vorgenannten Ausführungsformen oder mit einem System nach einer der vorgenannten Ausführungsformen.

Weitere Ausführungsformen ergeben sich anhand der in der Figurenbeschreibung näher erläuterten Ausführungsbeispiele. Hierbei zeigen
Fig. 1: ein elektrisches Steuergerät gemäß einer ersten Ausführungsform im ersten Modus und
Fig. 2: ein Steuergerät im zweiten Modus.

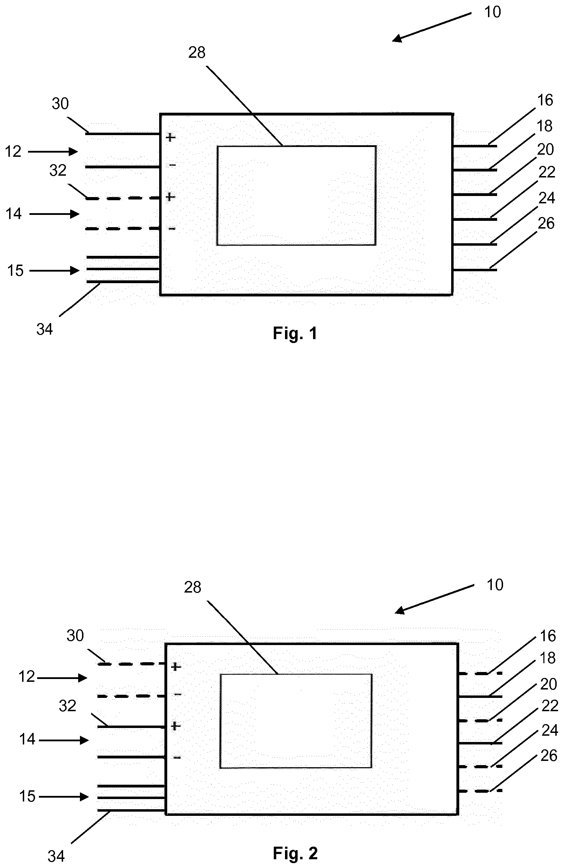

Fig. 1 zeigt ein elektrisches Steuergerät 10. Das Steuergerät 10 umfasst einen ersten Energieversorgungsanschluss 12 und einen zweiten Energieversorgungsanschluss 14. Der erste Energieversorgungsanschluss ist mit einer Energiequelle, beispielsweise einer Batterie eines Fahrzeugs verbindbar, um das Steuergerät 10 mit elektrischer Energie zu versorgen. Ebenfalls ist der zweite Energieversorgungsanschluss 14 vorgesehen, um das Steuergerät 10 mit elektrischer Energie zu versorgen, wobei eine an den zweiten Energieversorgungsanschluss anschließbare Energiequelle vorzugsweise eine Hilfsenergiequelle ist. Außerdem umfasst das Steuergerät 10 einen Signalanschluss 15. Der Signalanschluss 15 dient zum Zuführen von Steuer- oder Schaltsignalen.

Zudem umfasst das Steuergerät Ausgänge 16-26. Die Ausgänge 16-26 dienen zum elektrischen Ansteuern von Komponenten. Diese Komponenten sind beispielsweise elektrische oder elektro-mechanische Komponenten, wie beispielsweise ein Ventil oder eine Ventilkomponente, eines Ventils.

Außerdem umfasst das Steuergerät 10 eine Steuereinheit 28. Die Steuereinheit 28 dient zum Betreiben des Steuergeräts in einem ersten Modus und in einem zweiten Modus. In Fig. 1 ist der Betrieb des Steuergeräts im ersten Modus dargestellt. Dies ist exemplarisch durch die gestrichelten Linien des zweiten Energieversorgungsanschlusses 14 dargestellt, wobei durch diese Darstellung ausgedrückt wird, dass Energie über den ersten Energieversorgungsanschluss 12 vom Steuergerät 10 aufgenommen werden kann, wobei Energie über den zweiten Energieversorgungsanschluss 14 in diesem Modus nicht aufgenommen wird. In diesem ersten Modus wird demnach eine Energie vom ersten Energieversorgungsanschluss 12 aufgenommen, wobei alle Ausgänge 16-26, die einer ersten Anzahl der Ausgänge 16-26 zugeordnet sind, mit Hilfe der Energie, die über den ersten Energieversorgungsanschluss 12 aufnehmbar ist, ansteuerbar sind. Die Ansteuerung erfolgt in Abhängigkeit der Steuereinheit 28.

Weiter weist der erste Energieversorgungsanschluss 12 einen ersten Kontaktpartner 30 auf. Der zweite Energieversorgungsanschluss weist einen weiteren ersten Kontaktpartner 32 auf. Der erste Kontaktpartner 30 und der weitere erste Kontaktpartner 32 unterscheiden sich bis auf die durchgängige Linie bzw. die gestrichelte Linie in der Darstellung nicht. Dennoch ist der erste Kontaktpartner 30 des ersten Energieversorgungsanschlusses 12 derart ausgebildet, dass er einen geringeren Leitungswiderstand aufweist als der weitere erste Kontaktpartner 32 des zweiten Energieversorgungsanschlusses 14. Vorzugsweise weist der erste Kontaktpartner 30 einen größeren Querschnitt auf als der weitere erste Kontaktpartner 32.

Über den ersten Energieversorgungsanschluss 12 ist demnach ein höherer Strom bei gleicher Spannung als über den zweiten Energieversorgungsanschluss 14 aufnehmbar. Hierdurch sind Kontaktpartner des zweiten Energieversorgungsanschlusses 14 vorzugsweise so ausgebildet wie Kontaktpartner 34 des Signalanschlusses 15.

Fig. 2 zeigt das Steuergerät 10 im zweiten Modus. In diesem Modus ist Energie über den zweiten Energieversorgungsanschluss 14 aufnehmbar, um Komponenten zu versorgen. Dies ist wiederum durch nun gestrichelte Linien der Kontaktpartner 30 des ersten Versorgungsanschlusses und durchgängig gezeichneter Linien der Kontaktpartner 32 des zweiten Energieversorgungsanschlusses 14 dargestellt. In diesem zweiten Modus ist nun nur noch eine zweite Anzahl der Ausgänge 16-26, nämlich die Ausgänge 18 und 22, mit Energie vom zweiten Energieversorgungsanschluss 14 versorgbar. Dies ist wiederrum durch die nun gestrichelten Linien der Anschlüsse 16, 20, 24 und 26 dargestellt. Ein Ansteuern im zweiten, hier dargestellten, Modus mit der Steuereinheit 28 ist also derart begrenzt, dass lediglich noch die Ausgänge 18 und 22 ansteuerbar sind, wodurch eine maximale Stromaufnahme gegenüber dem ersten Modus reduziert ist und damit gewährleistet wird, dass die Kontaktpartner 32 des zweiten Energieversorgungsanschlusses 14 nicht zerstört werden.

Vorteilhafterweise ist bei einer Ausgestaltung gleichförmiger Kontaktpartner 32 des zweiten Energieanschlusses und der Kontaktpartner 34 des Signalanschlusses 15 der Einsatz eines standardisierten Steuergerätesteckers oder eines standardisierten Steuergerätesteckverbinders möglich.

### Bezugszeichenliste (Bestandteil der Beschreibung)

- 10: elektrisches Steuergerät
- 12: erster Energieversorgungsanschluss
- 14: zweiter Energieversorgungsanschluss
- 15: Signalanschluss
- 16-26: Ausgänge
- 28: Steuereinheit
- 30: erster Kontaktpartner des ersten Energieversorgungsanschlusses
- 32: weiterer erster Kontaktpartner des zweiten Energieversorgungs-anschlusses
- 34: Kontaktpartner des Signalanschlusses

## Patentansprüche

1. Elektrisches Steuergerät (10) für einen Fahrzeuganhänger oder ein Fahrzeug, wobei das elektrische Steuergerät (10) ein Schaltsteuergerät (TCU, Transmission Control Unit) für eine Getriebesteuerung ist, umfassend:
- eine Steuereinheit (28) zum Betreiben des Steuergeräts (10), - einen ersten Energieversorgungsanschluss (12), - einen zweiten Energieversorgungsanschluss (14) und - mehrere Ausgänge (16-26) zum elektrischen Ansteuern, insbesondere elektrischen Versorgen, von steuerbar an das Steuergerät anschließbaren Komponenten, die elektrische oder elektro-mechanische Komponenten sind, wobei die Steuereinheit (28) zum Betreiben des Steuergeräts (10) in einem ersten Modus und in einem zweiten Modus betreibbar ist, wobei im ersten Modus eine erste Anzahl der Ausgänge mit Energie vom ersten Energieversorgungsanschluss ansteuerbar ist und im zweiten Modus eine zweite Anzahl der Ausgänge mit Energie vom zweiten Energieversorgungsanschluss ansteuerbar ist wobei einige der genannten mehreren Ausgänge nur der ersten Anzahl zugeordnet sind, andere der genannten mehreren Ausgänge der ersten und der zweiten Anzahl zugeordnet sind, so dass die letztgenannten Ausgänge in beiden Modi mit Energie ansteuerbar sind, wobei des Weiteren die zweite Anzahl geringer ist als die erste Anzahl, wobei das Steuergerät eingerichtet ist, mit mindestens einem der Ausgänge eine Komponente anzusteuern, die ein Ventil ist, umfassend eine elektrische Magnet- Ventilkomponente und/oder eine pneumatische oder hydraulische Ventilkomponente, vorzugsweise ein Solenoidventil.

2. Elektrisches Steuergerät (10) nach Anspruch 1, wobei zumindest ein erster Kontaktpartner (30) des ersten Energieversorgungsanschlusses (12) einen geringeren Leitungswiderstand als zumindest ein weiterer erster Kontaktpartner (32) des zweiten Energieversorgungsanschlusses (14) aufweist.

3. Elektrisches Steuergerät (10) nach Anspruch 2, wobei das Steuergerät mindestens einen Signalanschluss (15) zum Zuführen von Steuersignalen mit mehreren Kontaktpartnern (34) aufweist, die jeweils einen im Wesentlichen gleichen Leitungswiderstand aufweisen, wobei der Leitungswiderstand mindestens eines Kontaktpartners (34) des Signalanschlusses (15) und der Leitungswiderstand zumindest des weiteren ersten Kontaktpartners (32) des zweiten Energieversorgungsanschlusses (14) im Wesentlichen gleich sind.

4. Elektrisches Steuergerät (10) nach Anspruch 2 oder 3, wobei der erste Kontaktpartner (30) des ersten Energieversorgungsanschlusses (12) zum Zuführen eines, vorzugsweise positiven, Spannungspotentials und weitere erste Kontaktpartner (32) des zweiten Energieversorgungsanschlusses (14) zum Zuführen eines, vorzugsweise weiteren positiven, Spannungspotentials eingerichtet ist.

5. Elektrisches Steuergerät (10) nach einem der vorhergehenden Ansprüche, wobei der erste Energieversorgungsanschluss (12) eingerichtet ist, mit einer Primärenergiequelle verbunden zu werden und/oder
der zweite Energieversorgungsanschluss (14) eingerichtet ist, mit einer Hilfsenergiequelle verbunden zu werden.

6. System mit einem elektrischen Steuergerät nach einem der Ansprüche 1 bis 5 sowie wenigstens einer Komponente, die eine elektrische oder elektro-mechanische Komponente ist, wobei die wenigstens eine Komponente mit wenigstens einem der Ausgänge (16-26) elektrisch verbindbar ist.

7. System nach Anspruch 6, mit einer Primärenergiequelle und einer Hilfsenergiequelle, wobei die Primärenergiequelle mit dem ersten Energieversorgungsanschluss (12) und die Hilfsenergiequelle mit dem zweiten Energieversorgungsanschluss (14) elektrisch verbindbar sind.

8. System nach Anspruch 6, wobei die wenigstens eine Komponente zumindest eine erste und eine zweite Komponente umfasst, zumindest im Betrieb die erste Komponente an einem ersten Ausgang der Ausgänge (16-26) und die zweite Komponente an einem zweiten Ausgang der Ausgänge (16-26) angeschlossen ist, wobei der erste und der zweite Ausgang der ersten Anzahl von Ausgängen (16-26) zugeordnet sind und nur der zweite Ausgang des ersten und zweiten Ausgangs auch der zweiten Anzahl von Ausgängen (16-26) zugeordnet ist.

9. Verfahren zum Betrieb eines Fahrzeuganhängers oder eines Fahrzeugs, insbesondere eines Nutzfahrzeugs, wie einen Lastkraftwagen oder dergleichen, oder einen Personenkraftwagen, unter Ansteuern von elektrischen oder elektromechanischen Komponenten mit einem Steuergerät (10) nach einem der Ansprüche 1 bis 5 oder einem System nach einem der Ansprüche 6 bis 8.

## Claims

1. Electrical control device (10) for a vehicle trailer or a vehicle, wherein the electrical control device (10) is a shift control device (TCU) for a transmission control unit, the electrical control device comprising: - a control unit (28) for operating the control device (10), - a first energy supply connection (12), - a second energy supply connection (14), and - a plurality of outputs (16-26) for electrically activating, in particular electrically supplying, components which can be controllably connected to the control device and which are electrical or electromechanical components, wherein the control unit (28) can be operated in a first mode and in a second mode to operate the control device (10), wherein, in the first mode, a first number of the outputs can be activated with energy from the first energy supply connection and, in the second mode, a second number of the outputs can be activated with energy from the second energy supply connection, wherein some of the above-mentioned plurality of outputs are only associated with the first number and others of the above-mentioned plurality of outputs are associated with the first and the second number so that the last-mentioned outputs can be activated with energy in both modes, wherein the second number is also less than the first number, wherein the control device is designed to activate a component using at least one of the outputs, which component is a valve comprising an electromagnetic valve component and/or a pneumatic or hydraulic valve component, preferably a solenoid valve.

2. Electrical control device (10) according to claim 1, wherein at least one first contact partner (30) of the first energy supply connection (12) has a lower line resistance than at least one further first contact partner (32) of the second energy supply connection (14).

3. Electrical control device (10) according to claim 2, wherein the control device has at least one signal connection (15) for delivering control signals to a plurality of contact partners (34) which each have a substantially equal line resistance, wherein the line resistance of at least one contact partner (34) of the signal connection (15) and the line resistance of at least the further first contact partner (32) of the second energy supply connection (14) are substantially equal.

4. Electrical control device (10) according to either claim 2 or claim 3, wherein the first contact partner (30) of the first energy supply connection (12) is designed to deliver a preferably positive voltage potential and the further first contact partner (32) of the second energy supply connection (14) is designed to deliver a further preferably positive voltage potential.

5. Electrical control device (10) according to any of the preceding claims, wherein the first energy supply connection (12) is designed to be connected to a primary energy source and/or the second energy supply connection (14) is designed to be connected to an auxiliary energy source.

6. System having an electrical control device according to any of claims 1 to 5 as well as at least one component which is an electrical or electromechanical component, wherein the at least one component can be electrically connected to at least one of the outputs (16-26).

7. System according to claim 6, having a primary energy source and an auxiliary energy source, wherein the primary energy source can be electrically connected to the first energy supply connection (12) and the auxiliary energy source can be electrically connected to the second energy supply connection (14).

8. System according to claim 6, wherein the at least one component comprises at least a first and a second component, and, at least during operation, the first component is connected to a first output of the outputs (16-26) and the second component is connected to a second output of the outputs (16-26), wherein the first and the second output are associated with the first number of outputs (16-26) and only the second output of the first and second output is also associated with the second number of outputs (16-26).

9. Method for operating a vehicle trailer or a vehicle, in particular a commercial vehicle, such as a truck or the like, or a passenger car, by activating electrical or electromechanical components using a control unit (10) according to any of claims 1 to 5 or a system according to any of claims 6 to 8.

## Revendications

1. Appareil de commande électrique (10) pour une remorque ou un véhicule, l'appareil de commande électrique (10) étant un appareil de commande de transmission (TCU, Transmission Control Unit) pour une commande de transmission, comprenant : - une unité de commande (28) de fonctionnement de l'appareil de commande (10), - un premier raccord d'alimentation en énergie (12), - un second raccord d'alimentation en énergie (14) et - plusieurs sorties (16-26) destinées à piloter électriquement, en particulier alimenter électriquement, des composants pouvant être raccordés de manière commandable à l'appareil de commande, qui sont des composants électriques ou électromécaniques, dans lequel l'unité de commande (28) de fonctionnement de l'appareil de commande (10) peut fonctionner dans un premier mode et dans un second mode, un premier nombre des sorties pouvant être pilotées dans le premier mode par l'énergie provenant du premier raccord d'alimentation en énergie et, dans le second mode, un second nombre des sorties pouvant être pilotées par l'énergie provenant du second raccord d'alimentation en énergie, quelques-unes des plusieurs sorties mentionnées n'étant associées qu'au premier nombre, d'autres des plusieurs sorties mentionnées étant associées au premier et au second nombre de telle sorte que les dernières sorties mentionnées peuvent être pilotées par l'énergie dans les deux modes, le second nombre étant en outre inférieur au premier nombre, l'appareil de commande étant conçu pour piloter, à l'aide d'au moins l'une des sorties, un composant qui est une vanne, comprenant un composant de vanne magnétique électrique et/ou un composant de vanne pneumatique ou hydraulique, de préférence une électrovanne.

2. Appareil de commande électrique (10) selon la revendication 1, dans lequel au moins un premier partenaire de contact (30) du premier raccord d'alimentation en énergie (12) présente une résistance de ligne inférieure à celle d'un autre premier partenaire de contact (32) du second raccord d'alimentation en énergie (14).

3. Appareil de commande électrique (10) selon la revendication 2, dans lequel l'appareil de commande présente au moins un raccord de signal (15) destiné à fournir des signaux de commande, comportant plusieurs partenaires de contact (34), qui présentent respectivement une résistance de ligne sensiblement identique, la résistance de ligne d'au moins un partenaire de contact (34) du raccord de signal (15) et la résistance de ligne au moins de l'autre premier partenaire de contact (32) du second raccord d'alimentation en énergie (14) étant sensiblement identiques.

4. Appareil de commande électrique (10) selon la revendication 2 ou 3, dans lequel le premier partenaire de contact (30) du premier raccord d'alimentation en énergie (12) est conçu pour fournir un premier potentiel de tension, de préférence positif, et un autre premier partenaire de contact (32) du second raccord d'alimentation en énergie (14) est conçu pour fournir un deuxième potentiel de tension, de préférence aussi positif.

5. Appareil de commande électrique (10) selon l'une des revendications précédentes, dans lequel le premier accord d'alimentation en énergie (12) est conçu pour être connecté à une source d'énergie primaire et/ou le second raccord d'alimentation en énergie (14) est conçu pour être connecté à une source d'énergie auxiliaire.

6. Système comportant un appareil de commande électrique selon l'une des revendications 1 à 5 ainsi qu'au moins un composant, qui est un composant électrique ou électromécanique, l'au moins un composant pouvant être connecté électriquement à au moins l'une des sorties (16-26).

7. Système selon la revendication 6, comportant une source d'énergie primaire et une source d'énergie auxiliaire, la source d'énergie primaire pouvant être connectée électriquement au premier raccord d'alimentation en énergie (12) et la source d'énergie auxiliaire pouvant être connectée électriquement au second raccord d'alimentation en énergie (14).

8. Système selon la revendication 6, dans lequel l'au moins un composant comprend au moins un premier et un deuxième composant, le premier composant étant raccordé, au moins lors du fonctionnement, à une première sortie des sorties (16-26) et le deuxième composant étant raccordé à une deuxième sortie des sorties (16-26), la première et la deuxième sortie étant associées au premier nombre de sorties (16-26) et seule la deuxième sortie parmi la première et la deuxième sortie étant également associée au second nombre de sorties (16-26).

9. Procédé de fonctionnement d'une remorque ou d'un véhicule, en particulier d'un véhicule utilitaire, telle qu'un camion ou analogue, ou une voiture particulière, par pilotage de composants électriques ou électromécaniques à l'aide d'un appareil de commande (10) selon l'une des revendications 1 à 5 ou d'un système selon l'une des revendications 6 à 8.
